# EUROPEAN PATENT APPLICATION

(11) **EP 2 924 297 A2**
(43) Date of publication of application: **30.09.2015**
(21) Application number: 15160088.9
(22) Date of filing: 20.03.2015
(51) Int. Cl.: F04D 19/00, F04D 25/08, F24F 13/20

(54) **AXIAL FLOW AIR CIRCULATOR**

(30) Priority: 28.03.2014 US 201414228339
(71) Applicant: SHOP VAC CORPORATION, Williamsport, Pennsylvania 17701 (US)
(72) Inventor: Westbrook, Kurt, Cogan Station, Pennsylvania, 17728 (US); Bartley, Seth A., Williamsport, Pennsylvania 17701 (US); Martinez, David A., Williamsport, Pennsylvania 17701 (US)
(74) Representative: Cabinet Plasseraud

(57) **Abstract**

A cylindrical air circulator (20) has a telescoping base handle section (82) that is spaced from the cylindrical wall (22) and extends between handle supports (80). Optional wings (94) on the handle supports (80) serve as a cord wrap. A connector (134) secured to a downstream end of an expandable tube (120) enables a user to secure that end to a structural member. An optional plate/tube combination provides a plurality of tubes (150) that can be directed in different directions. An optional pivotable connector (170) can be used to suspend the tubular wall (22) off the ground. Locks (176) enable a user to secure the connector (134) in a multitude of positions, enabling the cylinder to be locked in a variety of rotational positions about multiple axes when the air circulator (20) is suspended off the ground.

## Description

### CROSS-REFERENCE TO RELATED APPLICATIONS

Not applicable.

### BACKGROUND OF THE INVENTION

The present invention relates generally to air circulators, which are used to blow air for ventilation, drying purposes, etc.

One kind of conventional axial-flow air circulator has a tubular wall that houses a fan and a motor that drives that fan. Such circulators may have a pair of wheels, but may nonetheless cumbersome to move.

An axial-flow air circulator that is laid on the floor tends to direct the air flow horizontally, along the floor. Some axial-flow air circulators may be provided with a positionable, expandable tube that connects to the downstream end of the tubular wall in an arrangement that results in air blown from the fan being directed to and through the tube. This enables the flow of air to be directed away from the base location, but maintaining the position of the end of the tube and precisely directing the flow of air in other directions remain problems.

### BRIEF SUMMARY

The new air circulator that has been developed is more convenient to move, and offers more flexibility for directing the airflow and maintaining that direction.

The wheels on the new air circulator extend beyond a ventral axial segment of the tubular wall. Along with a support that is mounted on a ventral axial segment of the tubular wall, these wheels support the tubular wall in a horizontal position that is convenient for use. When the air circulator is tilted upright, the wheels also support the air circulator in a travel position.

The new air circulator has three new features.

For easier transportation, the new air circulator has a telescoping handle. A pair of handle supports is mounted to a dorsal axial segment of the tubular wall, opposite the axial ventral section. A base handle section is spaced from the dorsal axial segment of the tubular wall and extends between the handle supports and over the center of gravity of the air circulator when the air circulator is in the horizontal position. The new telescoping handle telescopes with respect to the base handle section between a retracted position and an extended position. A grip section of the telescoping handle extends beyond one of the axial ends of the tubular wall when the telescoping handle is in the extended position.

Optional wings on the handle supports are sized and arranged to serve as a cord wrap.

For better direction of the blown airflow, the new air circulator has a connector that is secured to a downstream end of the expandable tube and enables a user to secure that downstream end to a structural member.

An optional plate/tube combination may also be provided. The combination includes a plate that is arranged to be selectively secured to the downstream end of the tubular wall. A plurality of positionable tubes is connected to and extends from the plate, and the tubes are arranged so that air blown from the fan is directed to and through each of the positionable tubes.

An optional pivotable connector can be used for suspending the tubular wall off the ground. The pivotable connector has a plate that mounts to a wall, fastens to the base handle section, and provides rotation about two different axes. One or more locks on the connector enable a user to selectively secure the connector in a multitude of positions about each axis, enabling the user to lock the tubular wall in a variety of rotational positions about multiple axes when the tubular wall is suspended off the ground.

### BRIEF DESCRIPTION OF THE DRAWINGS

The invention may be better understood by referring to the accompanying drawings, in which:
Fig. 1 is an isometric view of one embodiment of an axial flow air circulator that utilizes aspects of the present invention, with a telescoping handle in a retracted position.
Fig. 2 is an isometric view of the same air circulator, with the telescoping handle in an extended position.
Fig. 3 is a front plan view of the air circulator.
Fig. 4 is a cross-sectional view of the air circulator, through lines 4-4 in fig. 3.
Fig. 5 is a top view of the air circulator.
Fig. 6 is a right side view of the air circulator.
Fig. 7 is a bottom plan view of the air circulator.
Fig. 8 is an isometric view of the air circulator in a tilted, travel position.
Fig. 9 is an isometric view of the air circulator with a positionable tube.
Fig. 10 is a cross sectional view of the air circulator of fig. 9.
Fig. 11 is an isometric view of the air circulator with an optional plate/tube combination.
Fig. 12 is a cross sectional view of the air circulator of fig. 11.
Fig. 13 is an isometric view the air circulator with a filter in place.
Fig. 14 is a cross sectional view of the air circulator seen in fig. 13.
Fig. 15 is an isometric view of the air circulator suspended above the ground with the optional pivotable connector.
Fig. 16 is a top plan view of the air circulator of fig. 15.
Fig. 17 is a side elevation view.
Fig. 18 is an enlarged view of a portion of the pivotable connector.
Fig. 19 is an isometric view of the air circulator suspended in an anlternative configuration.
Fig. 20 is a side elevation view.
Fig. 21 is an opposite side elevation view.

### DETAILED DESCRIPTION

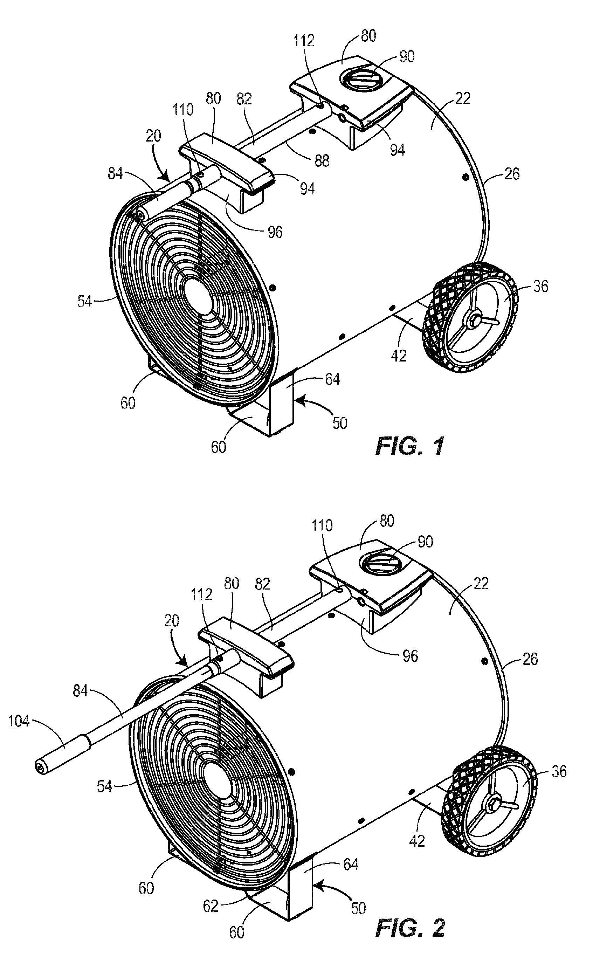

As seen in figs. 1 and 2, the new air circulator 20 has a tubular wall 22. The illustrated tubular wall is generally cylindrical, and round in profile. It measures approximately 20" along its axis from one axial end to the other, measures about 14" in diameter, and is made of stainless steel. Other shapes and sizes can also be used, and the wall can be made of other materials.

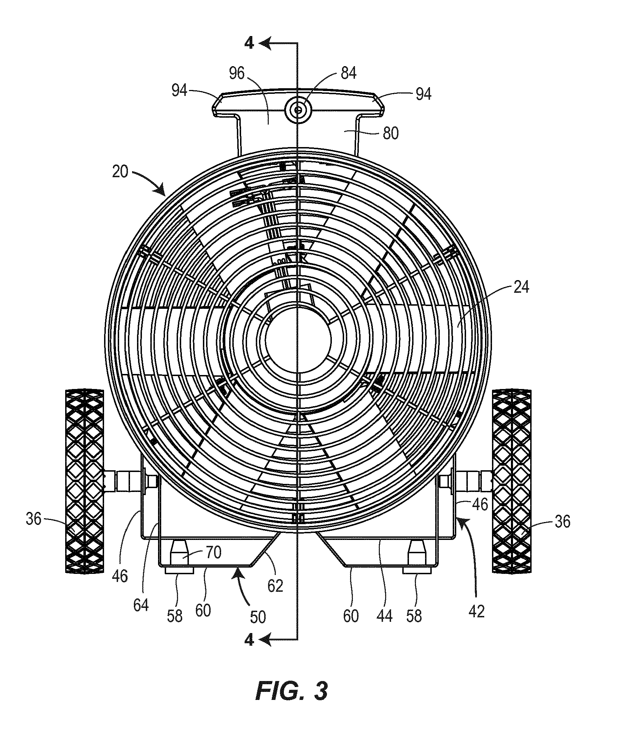

As seen in fig. 3, the tubular wall 22 houses a fan 24. The illustrated fan has six blades that rotate about the axis of the tubular wall. The fan is positioned near one axial end 26 of the tubular wall. Other types or arrangements of fans can be used, and positioned in other ways within the tubular wall. For example, two sets of fan blades could be provided, one at each end of the tubular wall.

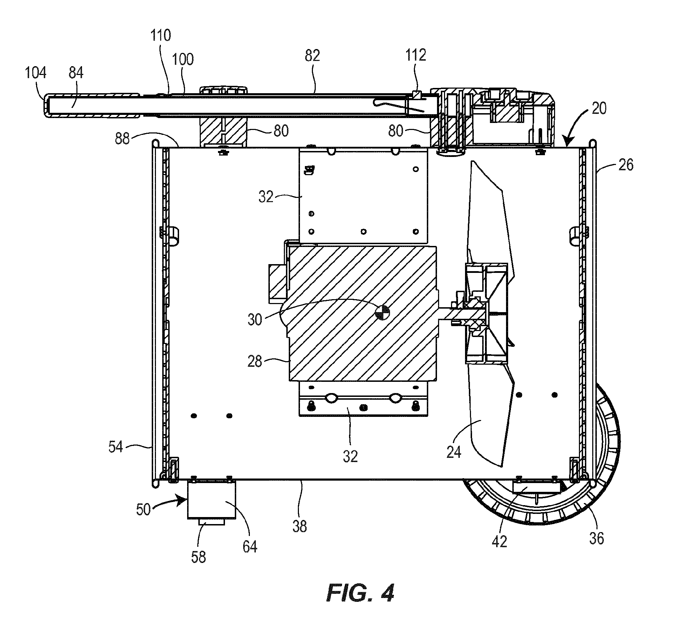

As seen in fig. 4, the fan 24 is driven by an electric motor 28 that is also housed in the tubular wall 22. In the illustrated arrangement, the axis of the motor is aligned with the centerline axis of the tubular wall, and the motor is positioned axially within the tubular wall 22 so that the center of gravity 30 of the air circulator 20 is near the midpoint of the product. Three radially offset mounting plates 32 hold the motor in position within the tubular wall.

### The supporting structure

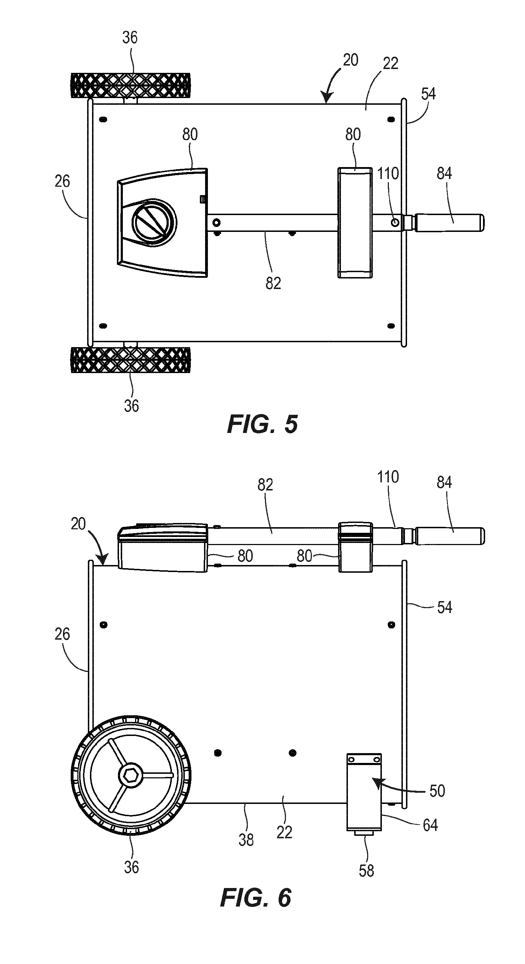

For movement, the new air circulator 20 has a pair of wheels 36, seen in figs. 5-7, that extend beyond a ventral axial segment 38 of the tubular wall 22. The illustrated wheels are approximately six inches in diameter and spaced approximately sixteen inches apart, and are mounted so that they hold the one axial end 26 of the tubular wall approximately one to four inches above the ground when the air circulator lies horizontally, and one to four inches above the ground when the air circulator is raised to a more upright position. The illustrated wheels extend approximately one to two inches axially beyond the lowermost end of the ventral axial segment, preventing that end from striking the ground as the air circulator is tilted upright on the wheels. This allows for vertical storage when the air circulator is not being used.

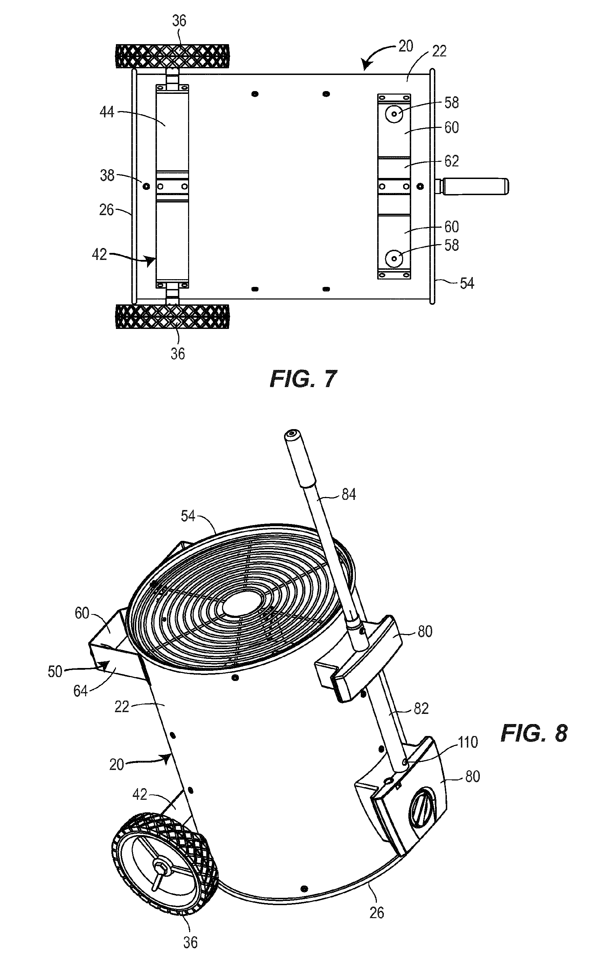

Although other arrangements could be used, each of the illustrated wheels 36 is mounted on a bent metal brace 42, best seen in figs. 3 and 7. The illustrated metal brace is approximately one to three inches wide. A transverse section 44 of the metal brace is connected, near its midpoint, to the ventral axial segment 38 of the tubular wall 22. Opposite ends of the metal brace are bent at approximately 90 degrees into arms 46 (fig. 3) whose opposite ends are also connected to the tubular wall. The wheels are mounted to the arms in a conventional way. A molded plastic brace could also be used, and the shape of the brace is not critical.

As seen in figs. 3, 6, and 7, a support 50 is also mounted on a ventral axial segment 38 of the tubular wall 22. The support is located near an opposite axial end 54 of the tubular wall, on the opposite side of the center of gravity 30 of the air circulator. In the illustrated air circulator, the wheels 36 are located near what could be construed as the front end of the air circulator (on the fan side) and the support is near the what could be construed as the back end (on the motor side), but the positions could be reversed.

Portions of the support 50 rest against the ground when the air circulator 20 is positioned in a horizontal position, as seen in figs. 1-7, and have contact surfaces 58 with sufficient coefficient of friction against common floor materials to hold the air circulator in position on the ground when the air circulator is blowing air. The illustrated support is made of a bent metal piece, with two foot sections 60 separated by a central section 62 that is connected to the ventral axial segment 38 of the tubular wall. Each of the foot sections is about one to three inches wide and one to six inches in length, and the outer ends of the foot sections are connected to the sides of the tubular wall 22 by connecting sections 64 of the bent metal piece. Other configurations could be used, and the support and the metal brace 42 could both be parts of the common structure.

A foot 70 (fig. 3) is plugged into a hole on each of the foot sections 60, and the two feet provide the two opposed contact surfaces 58 between the support 50 and the ground. Depending upon the size and power of the motor and the force of the air flow, plastic or rubber plugs having a contact area of 3 square inches might be used for the feet, being press fit into suitable holes in the foot sections 60.

The illustrated air circulator 20 can be tilted upright for transport to the travel position seen in fig. 8. In that position, the support 50 is lifted off the ground, enabling the air circulator to be conveniently moved across the ground on the wheels 36.

### The telescoping handle section

For easier transportation, the new air circulator 20 has a new telescoping handle arrangement, best seen in figs. 1, 2, and 4-6, that includes a pair of handle supports 80, a base handle section 82, and a telescoping handle 84.

The handle supports 80 are mounted to a dorsal axial segment 88 of the tubular wall 22, radially opposite the axial ventral segment 38. The illustrated handle supports are made from molded plastic, with one support attached toward one axial end 26 the air circulator 20 and the other attached toward an opposite axial end 54. One of the handle supports can be used as a base for motor controls 90 (fig. 1 and 2).

Optional wings 94 (figs. 1, 3) on the handle supports 80 are sized and arranged to serve as a cord wrap. In the illustrated arrangement, each of the handle supports has two opposed wings that are spaced radially away from the tubular wall 22 and axially align with the wings on the other handle support. In the illustrated arrangement, the wings are positioned about one to three inches radially away from the tubular wall, and project about one-half to two inches away from a base 96 of the handle support, which is one to six inches wide between the wings. The wings on the handle support toward one axial end 26 of the tubular wall is about three to eight inches in length along the axis of the tubular wall, and the wings on the handle support toward the other axial end 54 is about one to three inches in length along that axis. The illustrated position and spacing of the wings provides a convenient mounting point for wrapping an electrical cord in a gap between the wings and the tubular wall.

The base handle section 82 is spaced from the dorsal axial segment 88 of the tubular wall 22 and extends between the handle supports 80 and over the center of gravity 30 of the air circulator 20 when the air circulator is in the horizontal position. The illustrated base handle section is a hollow plastic or metal tube of between approximately one-half and three inches in diameter, positioned about one to three inches radially outwardly from the tubular wall. The base handle section and the handle supports are preferably sized and positioned so that a user can conveniently grasp the base handle section when a cord is wrapped around the handle supports. Having the base handle section above the center of gravity of the air circulator enables a user to use the base handle section to conveniently lift and carry the air circulator in a horizontal position. The center of gravity of the unit is further optimized to enable both lifting the unit with the retracted handle and also to facilitate easy rolling/maneuvering on the floor when the handle is extended. The system is well balanced while rolling and repositioning the unit.

As best seen in fig. 4, an upper end 100 of the base handle section 82 in the illustrated air circulator 20 extends throughout the entire height of the upper handle support 80 and projects outwardly from that support by approximately one to six inches. The outer projection is not always necessary, however.

The new telescoping handle 84 telescopes with respect to the base handle section 82 between a retracted position seen in fig. 1 and an extended position seen in fig. 2. The telescoping handle is positioned so that when the operator is repositioning/redirecting the unit while it is operating and blowing air, the air is directed away from the person that is doing the repositioning. The illustrated telescoping handle is approximately twelve to twenty-four inches long and made of metal, plastic, or wood that has a diameter that fits within the base handle section. The illustrated telescoping handle section is circular is cross section, but square or elongated cross sections can also be used.

In the illustrated embodiment, a grip section 104 of the telescoping handle 82 extends approximately one to six inches axially outwardly from the beyond the upper end 100 of the base handle section 82 when the telescoping handle is in the retracted position, forming a convenient handle for a user to grasp. Preferably, the grip section also extends beyond the axial end of the tubular wall 22, although this is not always necessary. The base handle section 82 of the illustrated air circulator 20 has two user-accessible holes 110 that are positioned about eight to twenty inches apart. The illustrated holes are each about one-eighth to one inch in diameter. A resiliently mounted catch 112 (fig. 4) is mounted on the telescoping handle 84 and fits into either of the holes, releasably locking the telescoping handle into either the retracted position or the extended position. To unlock the telescoping handle from either position, a user need only press the catch out of engagement with the hole. Other known mechanisms for releasably locking a telescoping element in position can also be used.

The retracted position of the telescoping handle 84 provides a compact form. Extending the telescoping handle provides a user with a longer lever arm for tilting the air circulator 20 upwards, and a more convenient handle for rolling the air circulator 20 across the ground.

### The tube connector

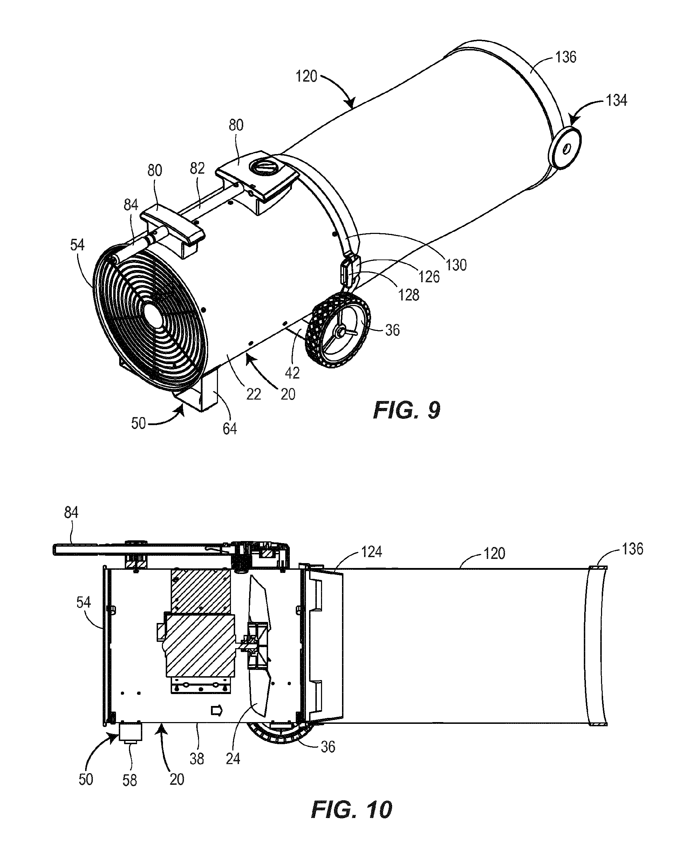

For directing airflow, the new air circulator 20 may be provided with a positionable, expandable tube 120, such as the one seen in figs. 9 and 10, that connects to the downstream axial end 26 end of the tubular wall 22 in an arrangement that causes the air blown from the fan 24 to be directed to and through the tube. The tube may be made spiral wound wire wrapped in a flexible plastic coating. Some arrangements of such tubes can expand from a few feet in length to 20 feet in length or more.

One end of the illustrated tube 120 is provided with a mounting collar 124 that may be made of molded plastic that nests onto the downstream axial end 26 of the air circulator 20. This mounting collar may be provided with conventional latch elements 126 that releasably mate onto corresponding latch elements 128 on a base collar 130 on the downstream end of the tubular wall 22. The illustrated air circulator has a pair of latches, one on each side of the tubular wall.

To better direct the airflow, the air circulator 20 has a connector 134 mounted on a downstream rim 136 on a downstream end of the expandable tube 120. The illustrated connector is a magnet with between 50-200 pounds of holding force. This form of connector can quickly and easily enable a user to secure the downstream end of the tube to a metal structure, such as a metal frame or track in a loading dock. This enables the user to more precisely direct the flow of air. For the same or for other uses, other forms of connectors might also be useful. For example, instead of a magnet, a hand-actuated spring clamp, or a c-clamp might be mounted on the tube.

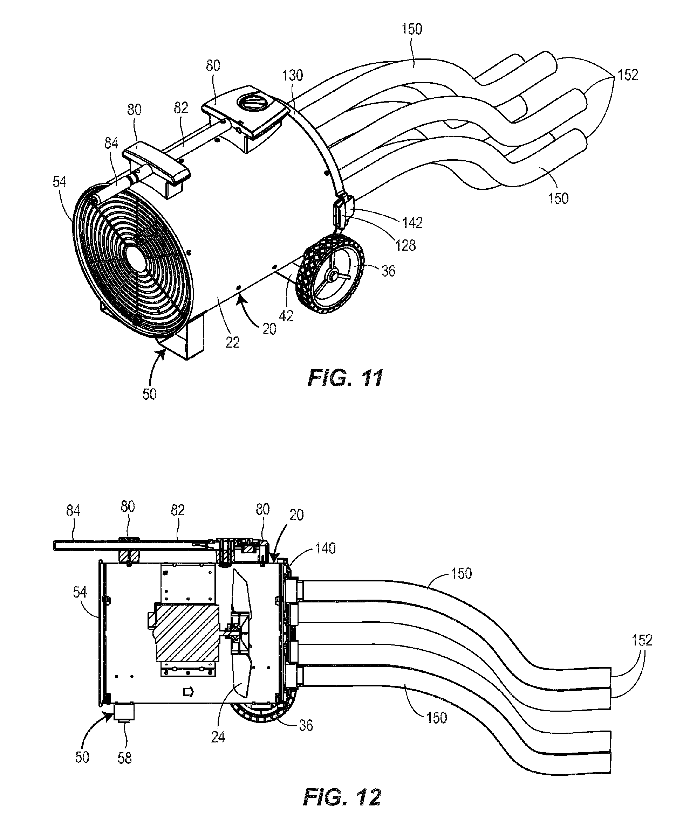

The air circulator 20 may also be provided with an optional plate/tube combination, seen in figs. 11 and 12, that can provide a different use. Like the mounting collar 124 on the expandable tube 120, a plate 140 nests onto the downstream axial end 26 of the air circulator, and has conventional latch elements 142 that releasably mate onto the corresponding latch elements 128 on the base collar 130 on the downstream end of the tubular wall 22, enabling a user to secure the optional plate to the downstream end of the tubular wall.

A plurality of individually-positionable tubes 150 are arranged on the optional plate 140 so that air blown from the fan is directed to and through each of the individual tubes. The individual tubes are of smaller diameter than the larger positionable tube 120, but can be of a similar construction. The downstream ends 152 of the individual tubes may be separate, enabling each such tube to be positioned separately. The ability to position each tube separately makes this arrangement particularly suitable for uses such as drying carpets or draperies, or in confined spaces.

### Filtering

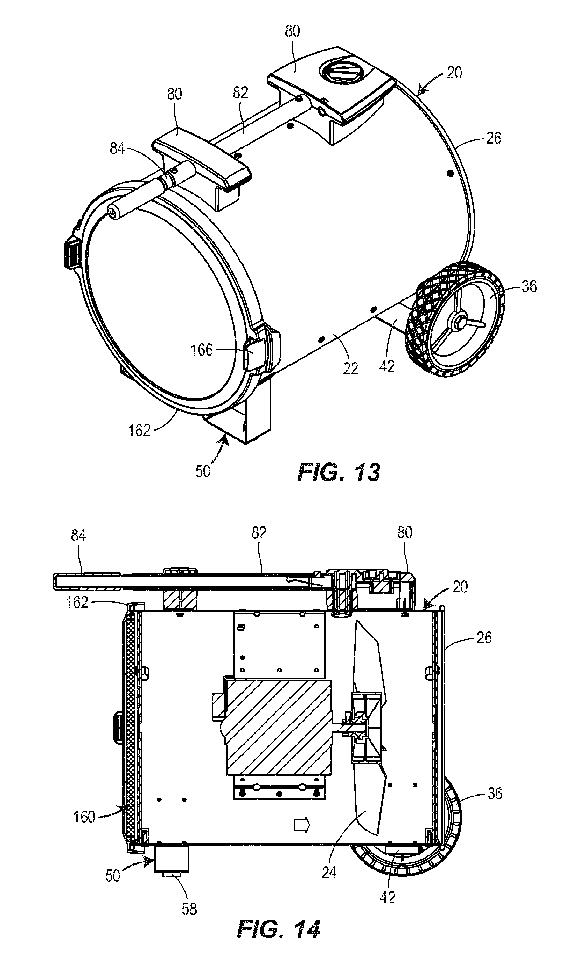

Filtering for the fan 24 can be provided by a filter medium 160 trapped within a filter mount 162 such as the radial mount seen in figs. 13 and 14. Such a mount can be provided on either axial end of the tubular wall 22, and can be secured in place to conventional latch elements 166 on a corresponding base element mounted on the tubular wall.

### The pivotable connector

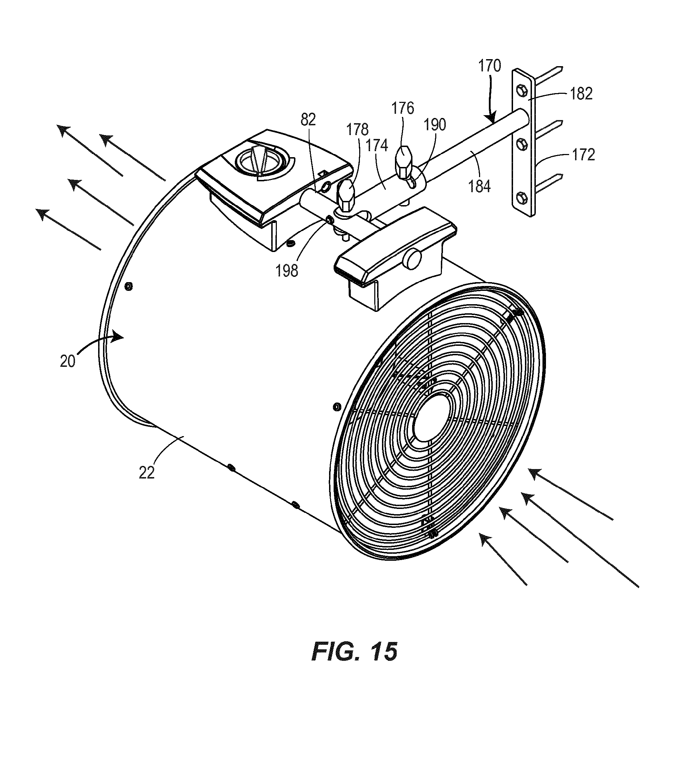

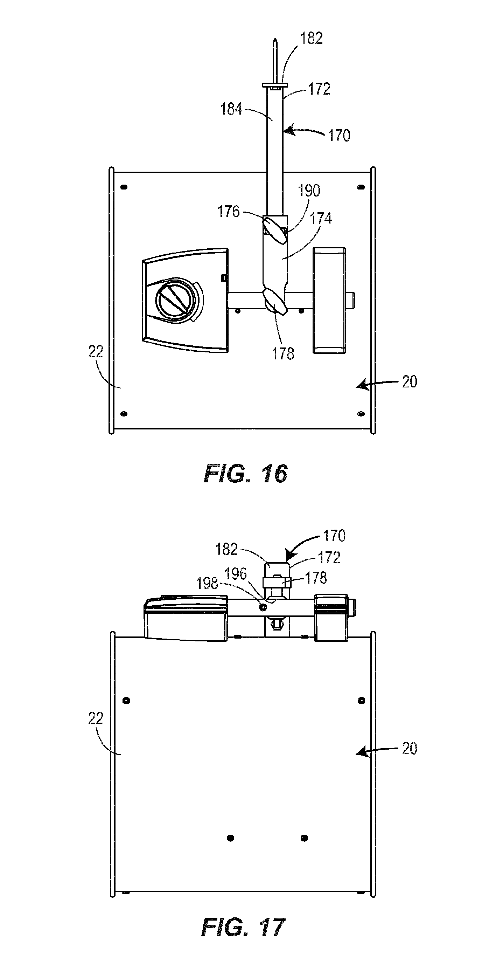

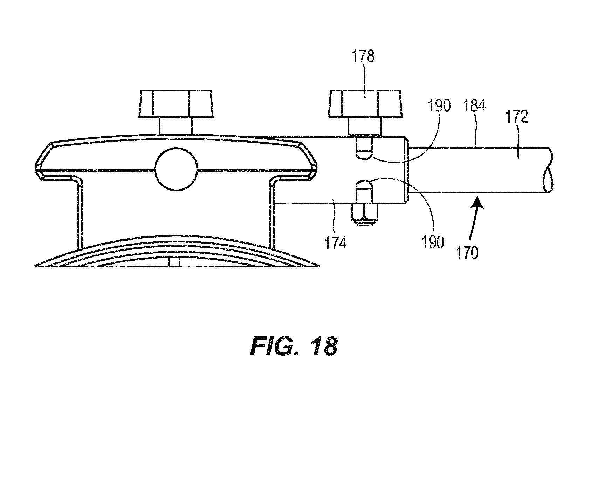

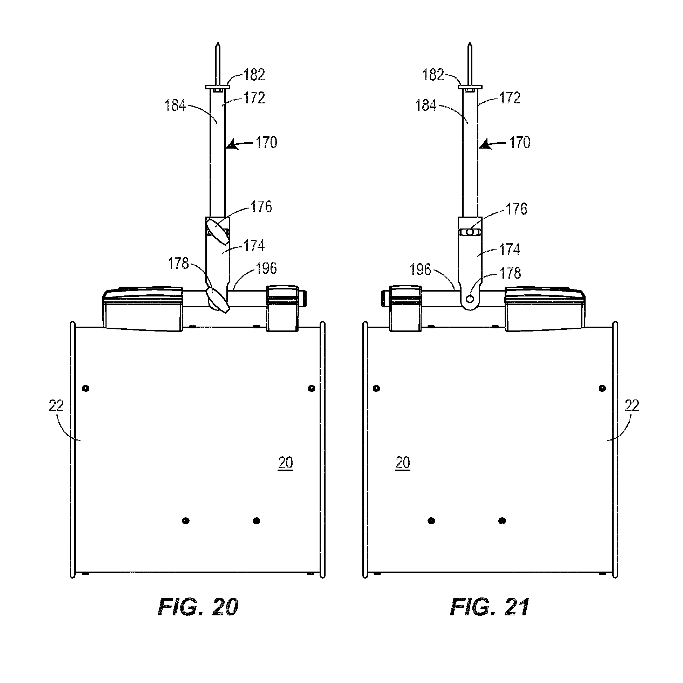

The illustrated pivotable connector 170, seen in figs. 15-21, has a mounting piece 172, a pivoting piece 174, a proximal lock 176 and a distal lock 178.

The mounting piece 172 is used to secure the pivotable connector 170 to a wall or mount. The illustrated connector has a plate 182 with a flat surface that can be readily secured by bolts or the like to a wall or a flat surface on a mount. An arm 184 extends outwardly from the plate.

The pivoting piece 174 is a preferably a tubular member. The pivoting piece and the arm 184 of the mounting piece 172 fit within each other, so that the pivoting piece can rotate about the axis of the arm. As best seen in figs. 15, 18, and 19, the proximal end of the pivoting piece in the illustrated air circulator has a pair of opposed slots 190 that align with a transverse bore in the distal end of the arm. The slots could alternatively be on the arm, with corresponding holes on the pivoting piece.

The proximal lock 176 fits through the opposed slots 190 and the transverse bore/holes, enabling the arm 184 of the mounting piece 172 and the pivoting piece 174 to be locked together in a range of rotational positions. In the arrangement seen in fig. 15, the two pieces are held with the lock in a central part of the slots. The tubular wall 22 of the air circulator 20 can be rotated up and down by rotating pivoting piece about the arm and using the proximal lock to secure the desired position.

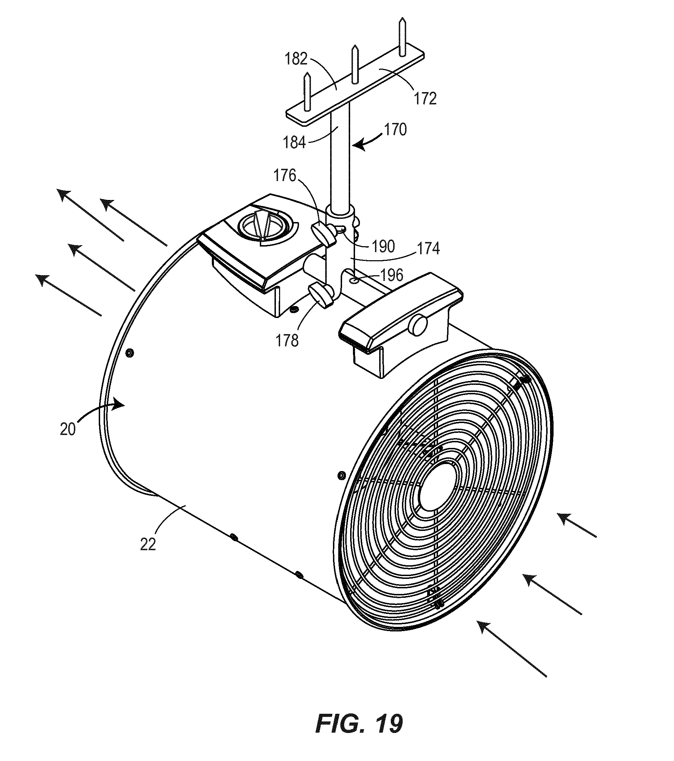

The distal end of the pivoting piece 174 has a pair of legs 194 that fit over the base handle section 82 of the air circulator 20. The distal lock 178 fits though holes in the legs and through a first set of holes 196 in the base handle section (best seen in fig. 19). In the configuration seen in fig. 15, loosening the distal lock enables the air circulator to be pivoted on the horizontal plane, and then secured in a desired rotational position by tightening the lock.

Fig. 19 shows how the pivotable connector 170 can be used to suspend the air circulator 20 from a ceiling. In this configuration, the proximal lock 176 is used to secure the rotational position of the air circulator on the horizontal plane. The distal lock 178 is threaded through a second set of holes 198 on the base handle section 82, which are axially rotated 90 degrees with respect to the first set of holes (fig. 15). With the pivoting piece 174 connected to the base handle section using these holes, the distal lock can be used to set the angle of the air circulator with respect to the horizontal plane.

This description of various embodiments of the invention has been provided for illustrative purposes. Revisions or modifications may be apparent to those of ordinary skill in the art without departing from the invention. The full scope of the invention is set forth in the following claims.

## Claims

1. An air circulator that comprises:
a motor that drives a fan;
a tubular wall that axially houses the motor and fan;
a support that is mounted on a ventral axial segment of the tubular wall;
a wheel axis that is generally perpendicular to the axis of the tubular wall;
a pair of opposed wheels that are mounted on the wheel axis and extend beyond the ventral axial segment of the tubular wall, supporting the tubular wall in both a travel position and a horizontal position in which the support lies against the ground;
a dorsal axial segment of the tubular wall that is located opposite the axial ventral segment;
a pair of handle supports that are mounted to the dorsal axial segment of the tubular wall;
a base handle section that is spaced from the dorsal axial segment of the tubular wall and extends between the handle supports and over the center of gravity of the air circulator when the air circulator is in the horizontal position; and
a telescoping handle that telescopes with respect to the base handle section between a retracted position and an extended position, a grip section of the telescoping handle extending beyond an upstream end of the tubular wall when the telescoping handle is in the extended position.

2. An air circulator as recited in claim 1, that also comprises:
wings on the handle supports that are sized and arranged to serve as a cord wrap.

3. An air circulator that comprises:
a motor that drives a fan;
a tubular wall that axially houses the motor and fan;
a positionable, expandable tube that connects to the downstream end of the tubular wall in an arrangement that results in air blown from the fan being directed to and through the positionable, expandable tube;
a connector that is secured to a downstream end of the positionable, expandable tube and enables a user to secure that downstream end to a structural member.

4. An air circulator as recited in claim 3, in which the connector is a magnet.

5. An air circulator as recited in claim 3, that also comprises:
wings on the handle supports that are sized and arranged to serve as a cord wrap.

6. An air circulator as recited in claim 3, in which:
the connector is a magnet; and
the handle supports have wings that are sized and arranged to serve as a cord wrap.

7. An air circulator that comprises:
a motor that drives a fan;
a tubular wall that axially houses the motor and fan;
a support that is mounted on a ventral axial segment of the tubular wall;
a wheel axis that is generally perpendicular to the axis of the tubular wall;
a pair of opposed wheels that are mounted on the wheel axis and extend beyond the ventral axial segment of the tubular wall, supporting the tubular wall in both a travel position and a horizontal position in which the support lies against the ground;
a dorsal axial segment of the tubular wall that is located opposite the axial ventral segment;
a pair of handle supports that are mounted to the dorsal axial segment of the tubular wall;
a base handle section that is spaced from the dorsal axial segment of the tubular wall and extends between the handle supports and over the center of gravity of the air circulator when the air circulator is in the horizontal position;
a telescoping handle that telescopes with respect to the base handle section between a retracted position and an extended position, a grip section of the telescoping handle extending beyond an axial end of the tubular wall when the telescoping handle section is in the extended position;
a positionable, expandable tube that connects to the downstream end of the tubular wall in an arrangement that results in air blown from the fan being directed to and through the positionable, expandable tube; and
a connector that is secured to a downstream end of the positionable, expandable tube and enables a user to secure that downstream end to a structural member.

8. An air circulator as recited in claim 7, in which the connector is a magnet.

9. An air circulator as recited in claim 7, that also comprises:
wings on the handle supports that are sized and arranged to serve as a cord wrap.

10. An air circulator as recited in claim 7, in which:
the connector is a magnet; and
the handle supports have wings that are sized and arranged to serve as a cord wrap.

11. An air circulator as recited in claim 7, that also comprises:
a plate that is arranged to be alternatively selectively secured to the downstream end of the tubular wall and has a plurality positionable tubes that are arranged so that air blown from the fan is directed to and through each of the positionable tubes.

12. An air circulator that comprises:
a motor that drives a fan;
a tubular wall that axially houses the motor and fan;
a pair of handle supports that are mounted to a dorsal axial segment of the tubular wall;
a base handle section that is spaced from the dorsal axial segment of the tubular wall and extends between the handle supports and over the center of gravity of the air circulator when the air circulator is in a horizontal position;
wings on the handle supports that are sized and arranged to serve as a cord wrap; and
a releasable, pivotable connector that fastens to the base handle section, provides rotation about two different axes, and has a plate that mounts to a wall, enabling a user to suspend the tubular wall off the ground; and
one or more locks on the connector that enable a user to selectively secure the connector in a multitude of positions about each axis, enabling the user to lock the tubular wall in a variety of rotational positions about multiple axes when the tubular wall is suspended off the ground.

13. An air circulator as recited in claim 12, that also comprises:
a positionable, expandable tube that connects to the downstream end of the tubular wall in an arrangement that results in air blown from the fan being directed to and through the positionable, expandable tube; and
a connector that is secured to a downstream end of the positionable, expandable tube and enables a user to secure that downstream end to a structural member.

14. An air circulator as recited in claim 12, that also comprises:
a pair of opposed wheels that extend beyond the ventral axial segment of the tubular wall, supporting the tubular wall in both a travel position and a horizontal position; and
a telescoping handle that telescopes with respect to the base handle section between a retracted position and an extended position.
